# EUROPEAN PATENT APPLICATION

(11) **EP 2 625 982 A1**
(43) Date of publication of application: **14.08.2013**
(21) Application number: 12154163.5
(22) Date of filing: 07.02.2012
(51) Int. Cl.: A47B 9/00

(54) **Control of a height adjustable piece of furniture**

(71) Applicant: KIH-utveckling AB, 554 39 Jönköping (SE)
(72) Inventor: Hjelm, Johan, 564 36 Bankeryd (SE)
(74) Representative: Willquist, Sofia Ellinor

(57) **Abstract**

The present invention relates to a height adjustable piece of furniture (1) comprising an electric motor for driving the height adjustable piece of furniture, a control unit (30) for control of the operation of the electric motor, wherein the height adjustable piece of furniture (1) further comprises an interface (20) for communicative connection to a computing device (11, 50) and wherein the interface (20) enables control of the control unit (30) by the computing device (11, 50).

## Description

### Technical field of the invention

The present invention relates to control of height adjustable piece of furniture and other surrounding functions.

### Technology Background

At a modern work place there are several devices and functions that can be controlled, such as raising or lowering the desk, adjusting the lighting conditions, the phone properties, the computer etc. Given the plurality of devices and functions, and the variety of adjustments that can be made, a lot of time is spent on adjusting the different devices and functions.

Several actors have introduced remote controls for raising/lowering the desk, adjusting the light etc to facilitate adjustments at the work place. However, a problem with such remote controls is that the user has several remote controls to handle. And even if a single remote control was introduced, that would require the user to invest in such a remote control.

Consequently, there is a need for a way to control the functions at a modern work place that overcomes above-mentioned problems.

### Summary of the invention

In the view of the above mentioned and other drawbacks of prior art, the object of the invention is to achieve a height adjustable piece of furniture that simplifies the control of relevant functions and devices.

The invention is based on the inventors realization that many users of height adjustable piece of furniture have a computing device equipped with a computing ability, and that said computing ability could be utilized to control the height adjustable piece of furniture and other functions and devices by communicatively connecting the computing device to an interface at the height adjustable piece of furniture.

According to a first aspect of the inventive concept, above and other objects are achieved through a height adjustable piece of furniture comprising an electric motor for driving the height adjustable piece of furniture, a control unit for control of the operation of the electric motor, wherein the height adjustable piece of furniture further comprises an interface for communicative connection to a computing device and wherein the interface enables control of the control unit by the computing device.

In the context of this application a computing device should be interpreted as a computing device comprising at least a processor unit, a storing unit and a graphical user interface adapted display. Examples of such computing devices are a stationary computer, a laptop, a mobile device such as a smartphone, a tablet computer or a personal digital assistant (PDA).

A height adjustable piece of furniture according to abovementioned embodiment may enable a user to control the height of the height adjustable piece furniture with the user's computing device. Thereby, the user may utilize the existing computing ability in the computing device, instead of having to spend money on a new device such as a remote control. Furthermore, by utilizing the user's computing device the risk of misplacing a remote control for adjusting the piece of furniture is overcome. Consequently, the required time and effort for controlling the height adjustable piece of furniture may be reduced.

According to another embodiment of the present invention the computing device is a mobile device.

According to another embodiment of the present invention the interface may further be adapted to enable control of electrical power outlets.

Thereby, a user may control the electrical power outlets from a computing device and thus avoid having to turn on/off or increase/decrease the power on a physical power switch. Moreover, a user may reduce the amount of devices used to control the height of the piece of furniture and the power outlets surrounding the height adjustable piece of furniture.

Furthermore, devices coupled to the electrical power outlets may be controlled through controlling the electrical power outlets. Thereby, the devices and functions that may be controlled by a single computing device are further increased.

According to yet another embodiment of the present invention the interface may further be adapted to enable control of lighting.

Thereby, a user may control the lighting from a computing device and thus avoid having to turn on/off or increase/decrease the lighting on a physical lighting switch. Furthermore, the user may avoid moving from the piece of furniture to adjust the lighting conditions. Moreover, a user may reduce the amount of devices used to control the height of the piece of furniture and the lighting.

According to another embodiment of the present invention the interface may further be adapted to enable control of a computer.

By communicatively connecting the computing device to the control unit, and further communicatively connecting the computer to the control unit, the computing device and the computer may communicate. Thereby, a user may control a computer from a computing device. For example, the user may turn on or off the computer from the computing device, or start and shut down programs running on the computer. Consequently, a user may reduce the amount of devices used to control the height of the piece of furniture and the computer.

Moreover, in one embodiment, when the communicative connection is a wireless distant connection, such as a WLAN connection, the user may start up the computer and/or software from a distance so that when the user arrives to the height adjustable piece of furniture, the computer has already started and the desired software is loaded. Thereby the user may save even more time.

According to yet another embodiment of the present invention the interface may further be adapted to enable control of a telephone.

Thereby, a user may control a telephone from a computing device. For example the user may answer the phone, end a call, set the phone to different statuses such as "Busy", "in a meeting" or "on vacation" through the computing device. Moreover, a user may reduce the amount of devices used to control the height of the piece of furniture and the telephone and its settings.

In one embodiment of the invention, the telephone may be configured to operate with a telephone number associated with the computing device when the computing device is connected to the interface.

Thereby, the user may operate the telephone, which may be a stationary telephone, with the telephone number associated with the computing device.

According to another embodiment of the present invention the communicative connection between the interface and the computing device may be a wireless connection.

With a wireless connection the user may communicatively connect the computing device to the adjustable piece of furniture's interface without the requirement of any cables or physical connectors. Thereby, less valuable workspace may be dedicated and the risk of losing a cable may be eliminated. Further, computing device's position may be flexible within the wireless communication range, which range may be dependent on the type of wireless connection that is used.

According to another embodiment of the present invention the wireless connection may be a near field communication connection.

With a near field communication connection the computing device may be communicatively connected to the interface through that computing device may be brought into the close range of the interface. Moreover, the computing device may be communicatively disconnected from the adjustable piece of furniture's interface through that the computing device is brought out of range of the near field communication. Thereby a user may save time and effort on how to connect and disconnect the computing device to the interface. This embodiment may be suitable when the computing device is a mobile device.

Moreover, a near field communication connection may be a relative secure connection due to the small range in which it is operable, typically a few centimeters. Moreover, buy using a near field communication connection, there will be no risk of accidently connecting the computing device to a proximate work station in the scenario where several workplaces, as described above, are situated next to each other to form a flexible working area.

According to yet another embodiment of the present invention the wireless connection may be a Bluetooth connection.

With a Bluetooth connection the computing device may be communicatively connected to the interface by an established standard which allows many different devices to be compatible with the interface.

According to another embodiment of the present invention the wireless connection may be a WLAN connection.

With a WLAN connection the computing device may be communicatively connected to the interface by an established standard which allows many different devices to be compatible with the interface. Furthermore, the WLAN connection may enable the computing device to be communicatively connected to the interface within a wide distance range, allowing the user to control the height adjustable piece of furniture and other devices or functions from a distance.

According to another embodiment of the present invention the communicative connection between the interface and the computing device may be a wired connection.

With a wired connection the computing device may be communicatively connected to the interface by an established standard which allows many different devices to be compatible with the interface. For example the wired connection may be a USB-connection, mini-USB-connection, micro-USB-connection, 30-pin dock connector or other wired connections. Moreover, with a wired connector charging of the computing device may be enabled. Further, the user may visually confirm that the computing device is connected to the integrated interface.

According to another embodiment of the present invention the computing device may be a mobile phone.

Thereby, the user may utilize the existing computing ability in the mobile phone, and further, by using a mobile phone, such as a smart phone, as the computing device the risk of misplacing a remote control for adjusting the piece of furniture is overcome. Moreover, many potential users of a height adjustable piece of furniture carry a mobile phone, thus no further devices are needed. Moreover, the user may already be familiar to the mobile phone's interface from prior use of the mobile phone, thus shortening the learning period.

According to another embodiment of the present invention the computing device may be a tablet computer.

Thereby, the user may utilize the existing computing ability in the tablet computer, and further, by using a tablet computer as the computing device the risk of misplacing a remote control for adjusting the piece of furniture may be overcome. Moreover, the user may already be familiar to the tablet computer's interface from prior use of the tablet computer, thus shortening the learning period.

According to another embodiment of the present invention the computing device may be a laptop.

According to another embodiment of the present invention the computing device may comprise software adapted to control the control unit and/or the electrical power outlets and/or the lighting and/or computer and/or telephone.

Thereby, the software may offer a variety of settings and adjustments for the user. Further, the software may be updated for further functions and compatibility over time. Moreover, the software may be installed in, and uninstalled from, computing devices according to the users' preference.

According to yet another embodiment of the present invention the computing device may be adapted to save settings for controlled devices and functions, and to match the settings to specific points of time.

Thereby, the user may follow up the different settings over time and analyze the settings. From that data the user may evaluate if other settings would be beneficial for the user. E.g. the user may see how much time it spend sitting at the piece of furniture, how much time is spent standing by the piece of furniture.

According to yet another embodiment of the present invention the computing device may be adapted to notify a user with recommendations for settings of the devices and functions.

According to another embodiment of the present invention the recommendations may include height of the height adjustable piece of furniture.

Thereby, the user may be informed of that s/he has been sitting for a long period, and that standing by the piece of furniture is recommended. Moreover, the computing device may inform about other conditions such as lightning or power supply to different devices.

According to another embodiment of the present invention the computing device may be voice-controlled.

With such a system the height of the height adjustable piece of furniture and other functions and devices may be controlled by voice commands. Thereby, the user may not have to physically interact with the computing device for controlling the functions. That may be desirable when the user's hands are busy with other tasks or when the user would like make a great impression on another person.

### Brief description of drawings

The invention will in the following be described in more detail with reference to the enclosed drawings, wherein:
Fig. 1 schematically illustrates a perspective-view of a height adjustable piece of furniture according to an embodiment of the invention comprising an interface for establishing a wireless connection to a mobile device,
Fig. 2 schematically illustrates a perspective-view of a height adjustable piece of furniture according to an embodiment of the invention comprising an interface for establishing a wired connection to a mobile device.
Fig. 3 schematically illustrates a perspective-view of a height adjustable piece of furniture according to an embodiment of the invention comprising an interface for establishing a wired connection to a stationary computer.

### Detailed description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

In the description below a height adjustable piece of furniture wherein the piece of furniture is a table, is mainly discussed. It should however be noted that this by no means should limit the scope of the application which is equally applicable on a bureau, a bookcase, a hutch, a desk or any other furniture with a top surface.

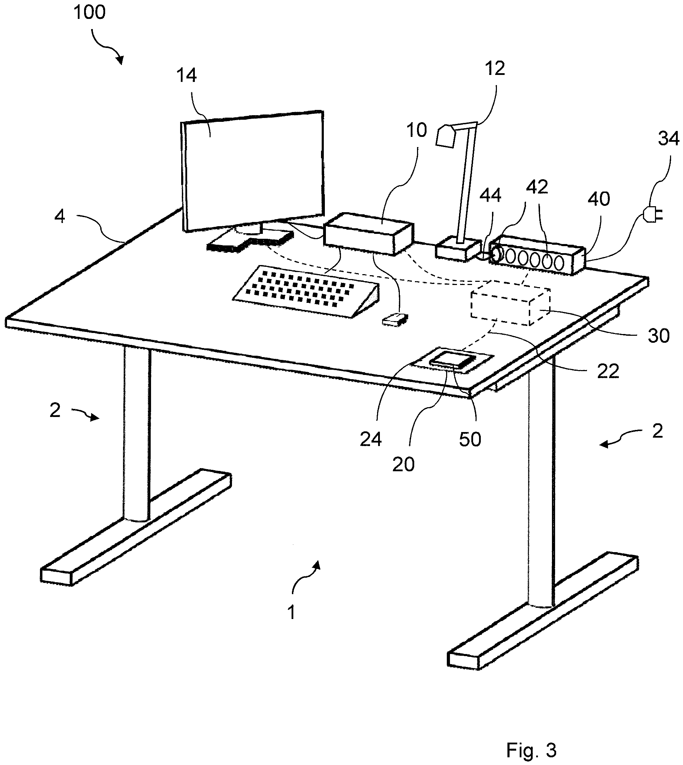

Moreover, in the description below the computing device is mainly referred to as a mobile device. However, as shown in fig 3 and described further below, the inventive concept is equally applicable where the computing device is a stationary computer.

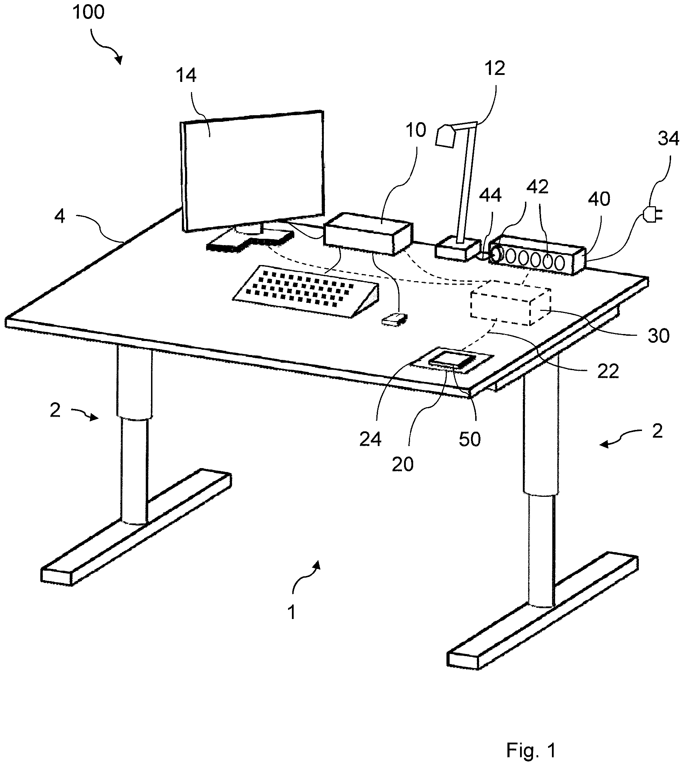

Fig. 1 illustrates a furniture arrangement 100 comprising a height adjustable piece of furniture illustrated as a height adjustable table 1 according to an embodiment of the inventive concept. The height adjustable table 1 comprises two extendable legs 2 and a table top 4. The legs 2 may be extendable in a telescopic manner providing a height adjustment function of the height adjustable table 1. The height adjustment of the height adjustable table 1 may be driven by one or more electric motors (not shown). The furniture arrangement 100 further comprises an interface 20 for communicative connection with a computing device, in this embodiment being a mobile device 50 such as a mobile telephone, a smart phone or a tablet computer. The furniture arrangement 100 further comprises a control unit 30. The control unit 30 is connected to a mains power supply network via a power socket 34. The control unit 30 thereby supplies power to the furniture arrangement 100. The control unit 30 comprises control means for controlling the operation of the power supply i.e. controlling the connection and disconnection of the power supply to the furniture arrangement 100. The interface 20 is connected to the control unit 30 via a cable 22.

The furniture arrangement 100 may be equipped with office equipment such as a computer 10, a computer screen 14, a telephone (not shown), a light 12 and the like, which are also connected to the control unit 30 via cables. In one embodiment the office equipment is directly coupled to the control unit 30, for example the computer 10 and computer screen 14 as shown in fig. 1. In another embodiment, the office equipment is indirectly coupled to the control unit via a power supply unit 40, for example the lamp 12 as also illustrated in fig. 1. In the latter embodiment the office equipment can be connected with intermediate power cables 44.

Fig. 1 further illustrates the power supply unit 40 in connection with the control unit 30. The power supply unit 40 is adapted to supply power to the equipment provided at the furniture arrangement 100. The power supply unit 40 is provided with a plurality of power sockets 42 to which power consuming devices such as the computer 10, the computer screen 14, the light 12 etc. may be connected via power cables 44. The control unit 30 controls the operation of the power supply unit 40.

When a mobile device 50 is connected to the interface 20, the interface 20 enables the mobile device 50 to send and receive signals from the control unit 30.Thereby the mobile device 50 can be used to control the height of the table top 4. Moreover the mobile device 50 can control activation/deactivation of the light 12, the computer 10, the computer screen 14, the telephone and/or the like. Further, the interface 20 enables the mobile device 50 to control the power supply unit 40.

The mobile device 50 can comprise software with a graphical user interface for controlling the different functions and devices. Thereby, a user can easily adjust settings for the functions and devices according to the user's preference.

Moreover, when connected to the interface 20, the mobile device 50 may be charged by the control unit, via the connection to the interface 20.

In embodiments where the interface 20 enables the mobile device 50 to control the electrical power outlets 42, lighting 12 and/or other functions, the power outlets 42, lighting 12 or other functions are arranged in proximity to the height adjustable piece of furniture 1. One example, as shown in fig. 1, is power outlets 42 at the workspace intended for charging the mobile device 50, providing power supply for the computer 10 or similar. Another example is the desk lamp 12.

In other embodiments, when the interface 20 also enables the mobile device 50 to control the electrical power outlets 42, lighting 12 and/or other functions, the power outlets 42, lighting 12 or other functions are arranged at another location than the height adjustable piece of furniture 1. One example is power outlets located at another place in a room (not shown), intended for providing power supply for a radiator, a fan, a light fixture or similar. Another example is a lighting fixture (not shown) arranged in a ceiling.

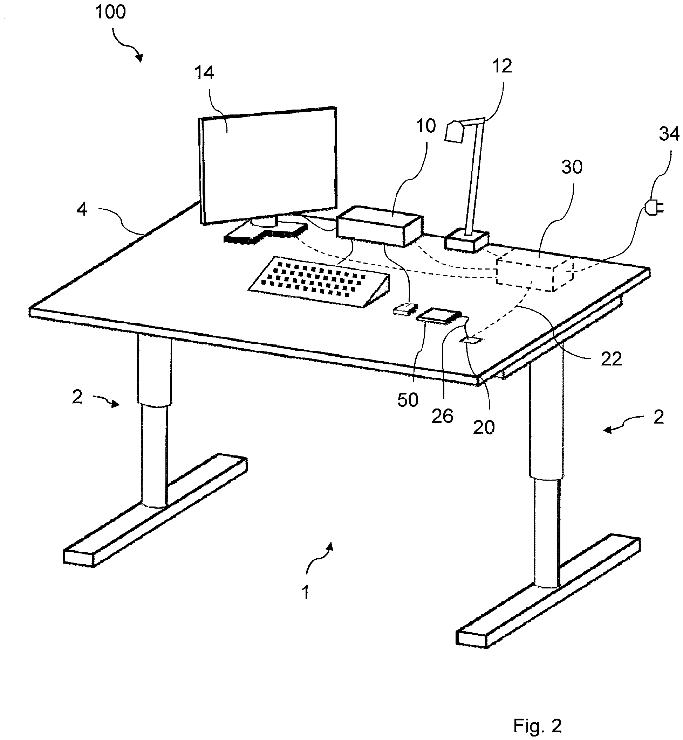

The interface 20 between the height adjustable table 1 and the mobile device 50 may be provided in a plurality of implementations. The interface 20 may be provided with a cable 26 for attachment and communicative connection with the mobile device 50 as illustrated in fig. 2. The cable may be a USB cable, mini-USB-connection, micro-USB-connection, 30-pin dock connector or any other communication cable adapted for attachment to a mobile device 50.

Alternatively, the interface may comprise wireless connection means 24 for wireless connection with the mobile device 50 as illustrated in fig. 1. The wireless connection means may be adapted for connection to the mobile device 50 via WLAN, Bluetooth, Near Field Communication (NFC) or the like. The interface 20 is an integrated part of the table top 4. The wireless connection means of the interface is provided in a specified area 24 of the table top 4 as illustrated in fig. 1. The user can control settings in the furniture arrangement 100 when the mobile device 50 is communicatively connected to the interface 20.

In one embodiment, e.g. when the wireless connection is a NFC connection, the communicative connection between the interface 20 and the mobile device 50 is only active when the mobile device is placed within a predefined distance from the specified area 24 of the table top 4. The predefined distance can vary from about 0 cm to about 50 cm, preferably about 0 cm to about 10 cm most preferably from about 0 cm to about 5 cm.

In one embodiment, the mobile device 50 is adapted to register the power supply to the furniture arrangement 100. It may further register the power consumption by different units or equipment connected to the control unit 20. Such register information may contain information of the time and/or the level of the power consumption for each device. The mobile device 50 would thereby for instance register how much power the computer screen 14 has consumed, or how much power the height adjustable table 1 has consumed during a specified time period. The registered information may be stored in the mobile device 50, the control unit 30 or at a remote server (not shown).

A user of the furniture arrangement 100 and the mobile device 50 may thereby be able to analyze the power consumption for different devices. The information may also be transferred further by the mobile device 50, to a central server (not shown) or an administrator.

In another embodiment of the inventive concept, the mobile device 50 is adapted to register other settings and/or statistics for different units or equipment connected to the control unit 30. Such register information may contain information of the time and/or the setting for each device. The mobile device 50 would thereby for instance register at what points of time and duration the user has the height adjustable table 1 in sitting height and at what points of time and duration the user has the height adjustable table 1 in a standing height. Moreover, other registrations may contain settings and variations over time for a light 12, and/or how much time is spent on the computer etc. Also this registered information may be stored in the mobile device 50, the control unit 30 or at a remote server.

A user of the furniture arrangement 100 and the mobile device 50 may thereby be able to analyze the settings for different devices. The information may also be transferred further by the mobile device 50, to a central server (not shown) or an administrator. Thereby, analysis can be made on how to improve or change a behavior, for example to improve the working conditions ergonomically.

In one embodiment of the inventive concept, the mobile device 50 can present recommendations for settings to the user. The recommendations can be based on stored and/or analyzed data from the usage, but they could also be based on other inputs. Such recommendations could be to encourage the user to for example alter the settings of the height adjustable table 1 or the light settings. Thereby, the user can get feedback on how to obtain an ergonomically improved position and/or light setting or equivalent.

In yet another embodiment of the invention, the height adjustable table 1 and the office equipment can be voice-controlled by the user giving voice commands to the mobile device 50. The mobile device 50 can have software that recognizes voice commands to for example lower the table top 4, turning off the light 12 or turning on the power to the power supply unit 40 etc.

In further one embodiment the mobile device 50 enables users to program different profiles containing a set of settings. E.g. a user that often gets tired in the afternoon can name a profile "Afternoon" and program that profile so that the lights are set on maximum light output, the desk is in a standing position and/or other desired settings. The user can save a plurality of profiles.

Further, the profiles can be adapted to the surroundings, for example if there is a hutch (not shown) placed under the desk and a painting (not shown) hanging on the wall above the desk, the length of stroke of the two extendable legs 2 can be limited so that the table top 4 does not move lower than the hutch or higher than the painting.

According to another embodiment of the inventive concept, the computing device is a stationary computer 11 as illustrated in fig 3. The stationary computer 11 is communicatively connected to the interface 20 with a cable 26. The cable may be a USB cable, mini-USB-connection, micro-USB-connection or any other communication cable adapted for attachment to a stationary computer 11. Moreover, in another embodiment, the stationary computer 11 is communicatively connected to the interface 20 with a wireless connection such as a WLAN, Bluetooth or Near Field Communication connection.

Further, the stationary computer 11 may be configured with software that allows it to function in similar ways as described above for the mobile devices. That is, to control the control unit 30 and surrounding functions and devices. The computing ability in a stationary computer 11 is often superior to the computing ability in a mobile device 50, thus allowing more demanding operations. That may be specifically beneficial for analysis and/or simulations on e.g. how to improve the user's working conditions ergonomically.

While the present invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A height adjustable piece of furniture (1) comprising:
an electric motor for driving the height adjustable piece of furniture (1),
a control unit (30) for control of the operation of the electric motor,
**characterized in that** said height adjustable piece of furniture (1) further comprises
an interface (20) for communicative connection to a computing device (11, 50) and wherein said interface (20) enables control of said control unit (30) by said computing device (11, 50).

2. A height adjustable piece of furniture (1) as according to claim 1,
wherein said interface (20) is further adapted to enable control of electrical power outlets (42).

3. A height adjustable piece of furniture (1) according to claim 1 or 2,
wherein said interface (20) is further adapted to enable control of lighting (12).

4. A height adjustable piece of furniture (1) according to any of preceding claims, wherein said interface (20) is further adapted to enable control of a computer (10).

5. A height adjustable piece of furniture (1) according to any of preceding claims, wherein said interface (20) is further adapted to enable control of a telephone.

6. A height adjustable piece of furniture (1) according to any of preceding claims, wherein the communicative connection between said interface (20) and said computing device (11, 50) is a wireless connection (24).

7. A height adjustable piece of furniture (1) according to claim 6, wherein said wireless connection is a near field communication connection.

8. A height adjustable piece of furniture (1) according to any of claims 1-7, wherein said computing device is a mobile device (50).

9. A height adjustable piece of furniture (1) according to any of claims 1-5, wherein the communicative connection between said interface (20) and said computing device (11, 50) is a wired connection (26).

10. A height adjustable piece of furniture (1) according to any of claims 1-9, wherein said computing device (11, 50) is a mobile phone.

11. A height adjustable piece of furniture according to any of claims 1-10,
wherein said computing device (11, 50) comprises a software adapted to control said control unit (30) and/or said electrical power outlets (42) and/or said lighting (12) and/or computer (10) and/or telephone.

12. A height adjustable piece of furniture (1) according to any of the
preceding claims, wherein said computing device (11, 50) is adapted to save settings for controlled devices and functions (1, 10, 12, 14, 42), and to match said settings to specific points of time.

13. A height adjustable piece of furniture (1) according to any of the
preceding claims, wherein said computing device (11, 50) is adapted to notify a user with recommendations for settings of said devices and functions (1, 10, 12, 14, 42).

14. A height adjustable piece of furniture (1) according to claim 14,
wherein said recommendations include height of said height adjustable piece of furniture (1).

15. A height adjustable piece of furniture (1) according to any of the
preceding claims, wherein said computing device (11, 50) is voice-controlled.
